# EUROPÄISCHE PATENTANMELDUNG

(11) **EP 2 068 033 A2**
(43) Veröffentlichungstag der Anmeldung: **10.06.2009**
(21) Anmeldenummer: 08013719.3
(22) Anmeldetag: 31.07.2008
(51) Int. Cl.: F16F 1/373, F16F 1/52

(54) **Lager mit Federkörpern und dessen Verwendung**

(30) Priorität: 05.12.2007 DE 102007058925
(71) Anmelder: Carl Freudenberg KG, 69469 Weinheim (DE)
(72) Erfinder: Hettler, Werner, 68309 Mannheim (DE)

(57) **Zusammenfassung**

Lager, umfassend ein Traglager (1) und ein Auflager (2), die durch einen als erste Druckfeder ausgebildeten ersten Federkörper (3) und durch einen als zweite Druckfeder ausgebildeten zweiten Federkörper (4), jeweils aus gummielastischem Werkstoff, aufeinander abgestützt sind, wobei - jeweils im Querschnitt des Lagers betrachtet - der erste Federkörper (3) axial in Richtung (5) einer Gewichtskraft einer mit dem Traglager (1) verbindbaren Last und der zweite Federkörper (4) quer (6) zur Richtung (5) der Gewichtskraft der mit dem Traglager (1) verbindbaren Last elastisch vorgespannt sind und wobei die beiden Federkörper (3, 4) axial zueinander benachbart und im Wesentlichen rechtwinklig zueinander angeordnet und mittels des Auflagers (2) miteinander verbunden sind.

## Beschreibung

### Technisches Gebiet

Die Erfindung betrifft ein Lager, umfassend ein Traglager und ein Auflager, die gummielastisch miteinander verbunden sind sowie dessen Verwendung.

### Stand der Technik

Aus dem Stand der Technik sind derartige Lager bekannt, die weitgehend rotationssymmetrisch ausgebildet sind, wobei das Traglager und das Auflager durch eine hohlkeglig ausgebildete Schubfeder aus gummielastischem Werkstoff aufeinander abgestützt sind.

Generell können Lager derart gestaltet werden, dass sie den Steifigkeitsanforderungen in allen drei Raumrichtungen gerecht werden und die geforderten Freiwege, Progressionsverläufe bzw. Gesamtfederwege ermöglichen.

Gelangt das Lager beispielsweise in Kraftfahrzeugen zur Anwendung, als Motor- oder Getriebelager, wird in der Regel eine Lagereigenresonanz angestrebt, die deutlich über der Eigenfrequenz des zu lagernden Aggregats liegt, um einen guten Fahrkomfort zu erreichen.
Insbesondere dann, wenn das Lager gute Isolierungseigenschaften haben soll, haben die zuvor beschriebenen Lager, bei denen Traglager und Auflager durch eine hohlkegelförmige Schubfeder aufeinander abgestützt sind, eine Lagereigenresonanz, die nicht weit genug über der Eigenfrequenz des zu lagernden Aggregats liegt.

### Darstellung der Erfindung

Der Erfindung liegt die Aufgabe zugrunde, ein Lager der vorbekannten Art derart weiterzuentwickeln, dass dieses ausgezeichnete Isolierungseigenschaften aufweist und eine Lagereigenresonanz hat, die deutlich über der Eigenfrequenz des zu lagernden Aggregats liegt.

Dieses Aufgabe wird erfindungsgemäß durch ein Lager mit den Merkmalen von Anspruch 1 gelöst. Auf vorteilhafte Ausgestaltungen nehmen die Unteransprüche Bezug.

Zur Lösung der Aufgabe ist ein Lager vorgesehen, umfassend ein Traglager und ein Auflager, die durch einen als erste Druckfeder ausgebildeten ersten Federkörper und durch einen als zweite Druckfeder ausgebildeten zweiten Federkörper, jeweils aus gummielastischem Werkstoff, aufeinander abgestützt sind, wobei - jeweils im Querschnitt des Lagers betrachtet - der erste Federkörper axial in Richtung einer Gewichtskraft einer mit dem Traglager verbindbaren Last und der zweite Federkörper quer zur Richtung der Gewichtskraft der mit dem Traglager verbindbaren Last elastisch vorgespannt sind und wobei die beiden Federkörper axial zueinander benachbart und im Wesentlichen rechtwinklig zueinander angeordnet und mittels des Auflagers miteinander verbunden sind. Entscheidend zur Lösung der Aufgabe ist, dass der erste und der zweite Federkörper jeweils als Druckfedern ausgebildet und in Wirkrichtung angeordnet sind. Die Druckfedern haben in ihrer Wirkrichtung eine hohe Federsteifigkeit mit einer progressiv verlaufenden Kennung, wobei diese Eigenschaften eine höherfrequente Lagereigenresonanz bedingen. Trotz guter Dämpfung liegt die Lagereigenresonanz des beanspruchten Lagers deutlich über der Eigenfrequenz des zu lagernden Aggregats.
Als Wirkrichtung ist beim ersten Federkörper die Richtung der Gewichtskraft zu verstehen, mit der die Last mittels des Traglagers auf den ersten Federkörper wirkt.
Die Wirkrichtung des zweiten Federkörpers entspricht beispielsweise dann, wenn das Lager als Flanschlager zur Befestigung eines Getriebes eines Kraftfahrzeugs zur Anwendung gelangt, der Fahrtrichtung des Kraftfahrzeugs und erstreckt sich, im Querschnitt des Lagers betrachtet, quer zur Gewichtskraft der abgestützten Last.
Dadurch, dass die beiden Federkörper mit einer elastischen Vorspannung versehen sind, werden Gebrauchsdauer verringernde Zugspannungen in den Federkörpern auf ein Minimum begrenzt. Durch die Vermeidung solcher Zugspannungen wird die Lagereigenresonanz weiter zu höheren Frequenzen verschoben, was bei Verwendung in einem Kraftfahrzeug einem deutlich verbesserten Fahrkomfort zugute kommt.

Die Federkörper können jeweils auf ihrer dem Auflager abgewandten Seite jeweils mit dem im Querschnitt des Lagers betrachtet im Wesentlichen T-förmigen Traglager verbunden sein. Durch eine derartige Ausgestaltung ist das Lager einfach und kostengünstig herstellbar; das Lager weist insgesamt einen teilearmen Aufbau auf.

Das Trag- und/oder das Auflager können aus einem metallischen Werkstoff bestehen, was hinsichtlich einer wirtschaftlichen Fertigung von Vorteil ist.

Die Federkörper können mit dem Trag- und/oder dem Auflager vulkanisiert sein. Hierbei ist von Vorteil, dass vulkanisierte Gummi-Metall-Teile eine gute Haltbarkeit während einer langen Gebrauchsdauer aufweisen, beispielsweise auch dann, wenn das Lager in Kraftfahrzeugen zur Anwendung gelangt und hohen Temperaturen und/oder Verunreinigungen ausgesetzt ist.

Die Federkörper können einstückig ineinander übergehend und materialeinheitlich ausgebildet sein. Aus fertigungstechnischer Sicht ist eine derartige einfache Ausgestaltung von hervorzuhebendem Vorteil.
Generell besteht jedoch auch die Möglichkeit, dass der erste und der zweite Federkörper aus voneinander abweichenden Werkstoffen bestehen, wobei in einem solchen Fall von Vorteil ist, dass die Gebrauchseigenschaften der einzelnen Federkörper dadurch besser an die jeweiligen Gegebenheiten des Anwendungsfalls angepasst werden können.

Das Traglager und/oder das Auflager können Anschlagpuffer aufweisen, die mit Anschlagflächen des Auflagers und/oder des Traglagers zur Begrenzung extremer Auslenkbewegungen in Berührung bringbar sind. Elastomere Werkstoffe reagieren generell insbesondere empfindlich auf Zugspannungen, so dass während der bestimmungsgemäßen Verwendung des Lagers darauf zu achten ist, solche Gebrauchsdauer verringernden Zugspannungen innerhalb der Federkörper zu vermeiden. Da das Lager unter statischer Last, beispielsweise, wenn im eingebauten Zustand die Last eines Getriebes auf dem Lager ruht, die beiden Federkörper unter einer elastischen Druck-Vorspannung innerhalb des Lagers angeordnet sind, entstehen während der üblichen Verwendung des Lagers keine Gebrauchsdauer verringernden Zugspannungen. Extreme Auslenkbewegungen von Traglager und Auflager relativ zueinander entstehen nur ausnahmsweise, beispielsweise dann, wenn ein Fahrzeug, in dem das Lager eingebaut ist, über Bordsteinkanten fährt oder über schlechte Wege. Bevor die Federkörper derart auf Zug belastet werden, dass sie Schaden nehmen könnten, stützen sich die jeweiligen Anschlagpuffer an den Anschlagflächen, um dies zu verhindern.
Je nach Anwendungsfall können Anschlagpuffer in allen drei Raumrichtungen vorgesehen sein.

Der erste Federkörper kann auf der dem Traglager zugewandten Seite ein bördelbares Kernblech zur Befestigung des ersten Federkörpers am Traglager und der zweite Federkörper innenseitig auf der dem Traglager zugewandten Seite einen hülsenförmigen Rahmen zur Verbindung des zweiten Federkörpers mit dem Traglager aufweisen. Die Montage eines solchen Lagers ist besonders einfach.

Das Kernblech kann mit dem ersten Federkörper und/oder der Rahmen mit dem zweiten Federkörper vulkanisiert sein. Das Kernblech und/oder der Rahmen können aus einem metallischen Werkstoff bestehen.

Davon abweichend besteht auch die Möglichkeit, das Lager unter Verzicht auf Kernblech und Rahmen zu fertigen. In einem solchen Fall würden die Federkörper unmittelbar mit dem Auflager und dem Traglager verbunden.

Zur Begrenzung von Weg- und Zugspannungen in den Federkörpern bei Ausfederung des Lagers kann es vorgesehen sein, dass der zweite Federkörper auf der dem ersten Federkörper axial abgewandten Seite einen mit dem Traglager starr verbundenen tellerförmigen Zuganschlag aufweist, wobei der Zuganschlag die dem ersten Federkörper abgewandte Oberfläche des zweiten Federkörpers teilweise überdeckt.

Das zuvor beschriebene Lager kann besonders vorteilhaft als Flanschlager zur Befestigung eines Getriebes eines Kraftfahrzeugs verwendet werden. Bei einer solchen Verwendung ist es von Vorteil, dass die Lagereigenresonanz eines solchen Lagers deutlich über der Eigenfrequenz des zu lagernden Getriebes liegt, wobei durch das vorteilhafte Eigenresonanz-Verhalten des Lagers ein guter Fahrkomfort erreicht wird.

### Kurzbeschreibung der Zeichnung

Zwei Ausführungsbeispiele des erfindungsgemäßen Lagers werden nachfolgend anhand der Figuren 1 bis 7 näher beschrieben.

Diese zeigen in schematischer Darstellung:
- Fig. 1: ein erstes Ausführungsbeispiel des erfindungsgemäßen Lagers in perspektivischer Darstellung,
- Fig. 2: das Lager aus Fig. 1, quer geschnitten,
- Fig. 3: das Lager aus Fig. 1, längs geschnitten,
- Fig. 4: die Darstellung aus Fig. 2, zweidimensional
- Fig. 5: die Darstellung aus Fig. 3, zweidimensional
- Fig. 6: ein zweites Ausführungsbeispiel des erfindungsgemäßen Lagers in längs geschnittener Darstellung und
- Fig. 7: das Lager aus Figur 6, quer geschnitten.

### Ausführung der Erfindung

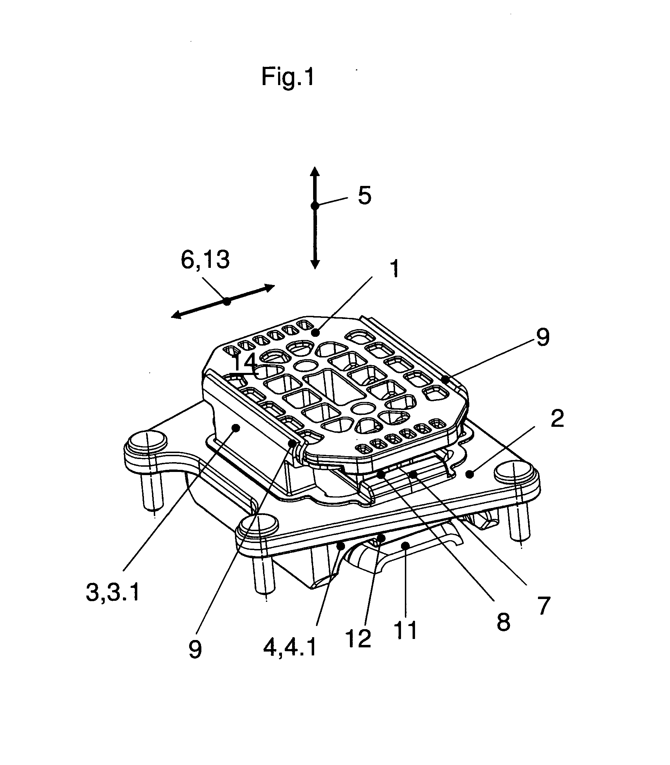

Die Figuren 1 bis 7 zeigen zwei Ausführungsbeispiele von Lagern, wobei jedes Ausführungsbeispiel ein Traglager 1 und ein Auflager 2 umfasst, die aus einem metallischen Werkstoff bestehen. Das Traglager 1 und das Auflager 2 sind durch einen ersten 3 und einen zweiten Federkörper 4 elastisch nachgiebig miteinander verbunden, wobei die beiden Federkörper 3, 4 jeweils als Druckfedern ausgebildet sind.

Für die vorteilhaften Gebrauchseigenschaften der gezeigten Lager, insbesondere eine Lagereigenresonanz, die deutlich über der Eigenfrequenz des zu lagernden Aggregats, hier eines Getriebes, liegt, ist es wesentlich, dass, jeweils im Querschnitt des Lagers betrachtet, der erste Federkörper 3 in Richtung 5 der Gewichtskraft einer mit dem Traglager 1 verbindbaren Last, beispielsweise eines Getriebes, und der zweite Federkörper 4 quer 6 zur Richtung 5 der mit dem Traglager 1 verbindbaren Last elastisch vorgespannt sind. Die beiden Federkörper 3, 4 weisen daher eine Druckvorspannung auf, so dass Gebrauchsdauer verringernde Zugspannungen während der bestimmungsgemäßen Verwendung der Lager ausgeschlossen sind. Die beiden Federkörper 3, 4 sind axial zueinander benachbart angeordnet und einander im Wesentlichen rechwinklig zugeordnet sowie mittels des Auflagers 2 miteinander verbunden.

In Fig. 1 ist eine perspektivische Ansicht des ersten Ausführungsbeispiels des erfindungsgemäßen Lagers gezeigt. Auf der der abzustützenden Last axial zugewandten Seite des Lagers ist das Traglager 1 angeordnet, mit Ausnehmungen, die eine Befestigung der zu lagernden Last, beispielsweise eines Getriebes, ermöglichen.

Die Fahrtrichtung des Kraftfahrzeugs, in dem das Lager zur Anwendung gelangt, ist mit dem Bezugszeichen 13 versehen.

Der erste Federkörper 3 umfasst im hier gezeigten Ausführungsbeispiel zwei Teilfederkörper 3.1 und 3.2, die jeweils im Wesentlichen quaderförmig ausgebildet sind und sich quer zur Fahrtrichtung 13 erstrecken und in Fahrtrichtung 13 mit Abstand benachbart zueinander angeordnet sind. Jeder der Teilfederkörper 3.1, 3.2 ist mit einem Kernblech 9 mit dem Traglager 1 verbördelt, wobei das Kernblech 9 jeweils mit den beiden Teilfederkörpern 3.1, 3.2 vulkanisiert ist.

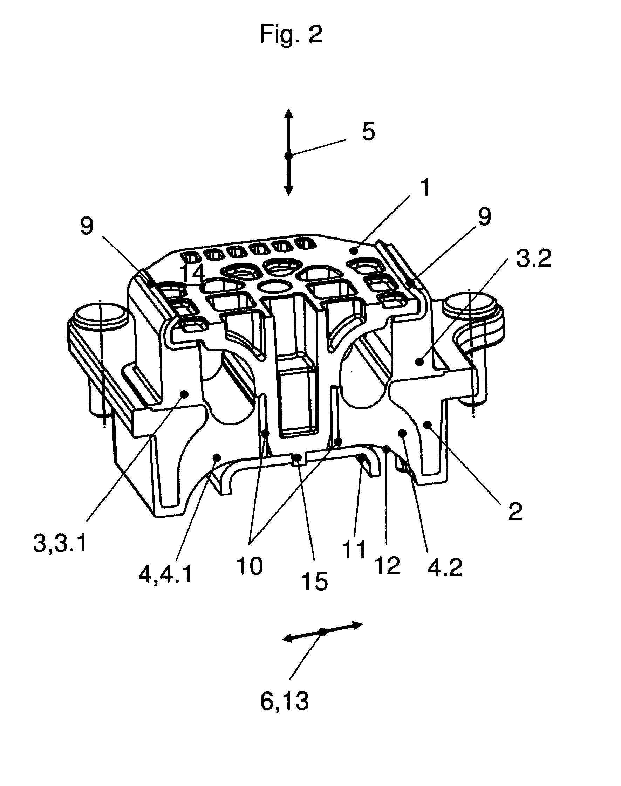

In Fig. 2 ist das Lager aus Fig. 1 in quer geschnittener Darstellung gezeigt.
In dieser Darstellung ist auch der zweite Federkörper 4 zu erkennen, der ebenfalls zwei Teilfederkörper 4.1, 4.2 umfasst, die sich quer zur Fahrtrichtung 13 des Lagers erstrecken. Die Teilfederkörper 4.1, 4.2 des zweiten Federkörpers 4 sind auf der dem Traglager 1 innen zugewandten Seite mit einem Rahmen 10 vulkanisiert, wobei der Rahmen 10 am Traglager 1 befestigt ist.

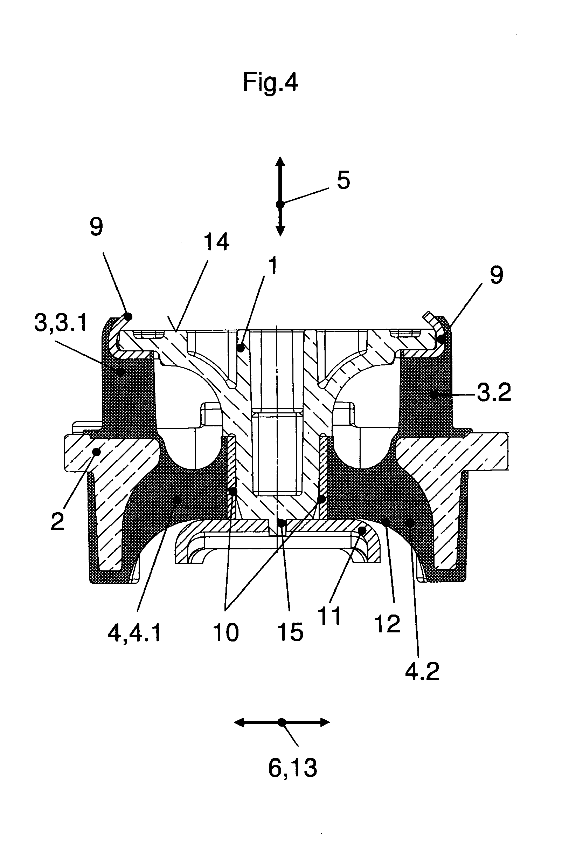

Um sowohl den ersten Federkörper 3 als auch den zweiten Federkörper 4 mit einer Druckvorspannung zu beaufschlagen, weist das Traglager auf der der Flanschfläche 14 axial abgewandten Seite einen Vorsprung 15 auf, der den Zuganschlag 11 in axialer Richtung durchgreift und mit diesem verstemmt ist. Durch dieses Verstemmen des Traglagers 1 mit dem Zuganschlag 11 wird eine Druck-Vorspannung in die beiden Federkörper 3, 4 eingebracht.
In diesem Querschnitt, ebenso wie im Querschnitt entsprechend Fig. 4, ist die T-förmige Gestalt des Auflagers 1 zu erkennen.

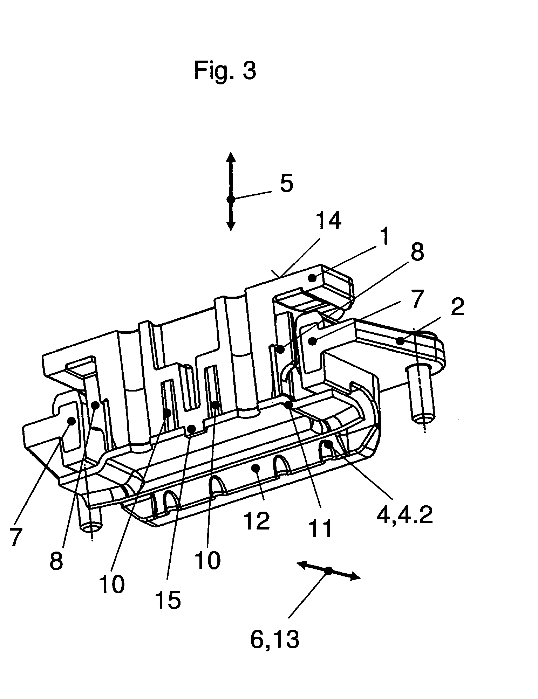

In Fig. 3 ist das Lager aus Fig. 1 längs geschnitten gezeigt.
Auch in dieser Darstellung ist die Verstemmung zwischen dem Traglager 1 und dem Zuganschlag 11 mittels des Vorsprungs 15 gut zu erkennen.

Quer zur Fahrtrichtung 13 weist das Auflager Anschlagpuffer 7 auf, die zur Begrenzung von Extremauslenkungen an Anschlagflächen 8 des Traglagers 1 anlegbar sind.

In Fig. 4 ist der Querschnitt aus Fig. 2 zweidimensional dargestellt.

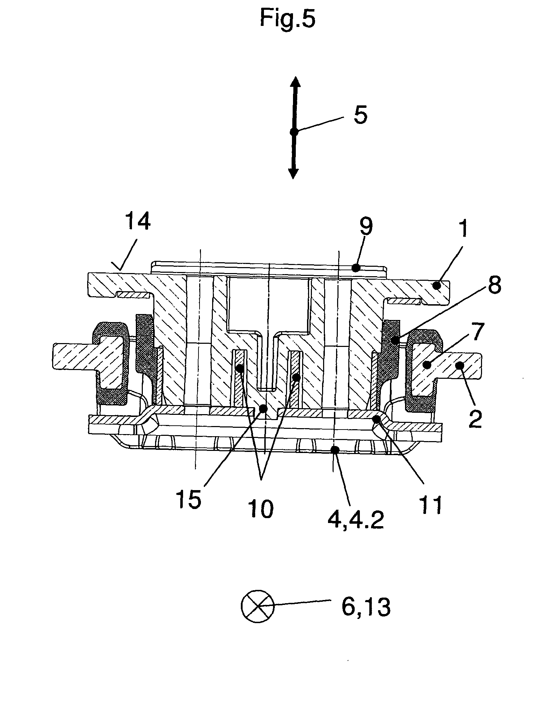

In Fig. 5 ist der Längsschnitt aus Fig. 3 zweidimensional dargestellt.

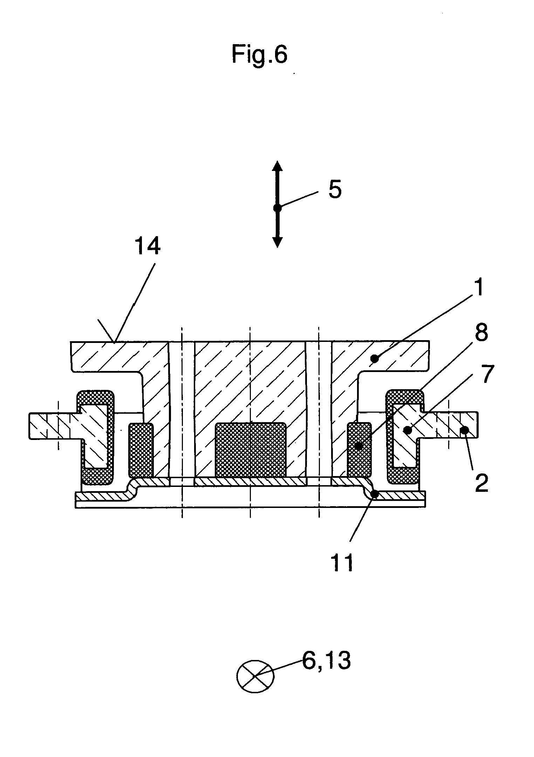

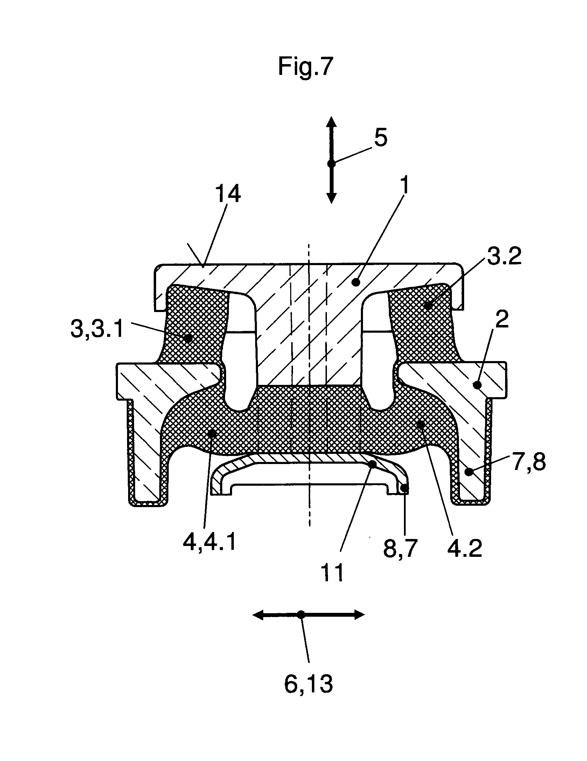

In Fig. 6 ist ein Längsschnitt durch ein zweites Ausführungsbeispiel eines Lagers gezeigt, das sich vom Lager aus den Figuren 1 bis 5 dadurch unterscheidet, dass die Federkörper 3, 4 unmittelbar am Traglager 1 und am Auflager 2 befestigt sind; Kernblech 9 und Rahmen 10 aus den Figuren 1 bis 5 gelangen beim zweiten Ausführungsbeispiel des Lagers entsprechend den Figuren 6 und 7 nicht zur Anwendung. Das zweite Ausführungsbeispiel hat deshalb einen besonders teilearmen Aufbau.

In Fig. 7 ist das Lager aus Fig. 6 in quer geschnittener Darstellung gezeigt.

## Patentansprüche

1. Lager, umfassend ein Traglager (1) und ein Auflager (2), die durch einen als erste Druckfeder ausgebildeten ersten Federkörper (3) und durch einen als zweite Druckfeder ausgebildeten zweiten Federkörper (4), jeweils aus gummielastischem Werkstoff, aufeinander abgestützt sind, wobei - jeweils im Querschnitt des Lagers betrachtet - der erste Federkörper (3) axial in Richtung (5) einer Gewichtskraft einer mit dem Traglager (1) verbindbaren Last und der zweite Federkörper (4) quer (6) zur Richtung (5) der Gewichtskraft der mit dem Traglager (1) verbindbaren Last elastisch vorgespannt sind und wobei die beiden Federkörper (3, 4) axial zueinander benachbart und im Wesentlichen rechtwinklig zueinander angeordnet und mittels des Auflagers (2) miteinander verbunden sind.

2. Lager nach Anspruch 1, **dadurch gekennzeichnet, dass** die Federkörper (3, 4) jeweils auf ihrer dem Auflager (2) abgewandten Seite jeweils mit dem, im Querschnitt des Lagers betrachtet, im Wesentlichen T-förmigen Traglager (1) verbunden sind.

3. Lager nach einem der Ansprüche 1 oder 2, **dadurch gekennzeichnet, dass** das Trag- (1) und/oder das Auflager (2) aus einem Metall, Kunststoff oder einem Verbundwerkstoff besteht.

4. Lager nach einem der Ansprüche 1 bis 3, **dadurch gekennzeichnet, dass** die Federkörper (3, 4) mit dem Trag- (1) und/oder dem Auflager (2) vulkanisiert sind.

5. Lager nach einem der Ansprüche 1 bis 4, **dadurch gekennzeichnet, dass** die Federkörper (3, 4) einstückig ineinander übergehend und materialeinheitlich ausgebildet sind.

6. Lager nach einem der Ansprüche 1 bis 5, **dadurch gekennzeichnet, dass** das Trag- (1) und/oder das Auflager (2) Anschlagpuffer (7) aufweisen, die mit Anschlagflächen (8) des Auflagers (2) und/oder des Traglagers (1) zur Begrenzung extremer Auslenkbewegungen in Berührung bringbar sind.

7. Lager nach einem der Ansprüche 1 bis 6, **dadurch gekennzeichnet, dass** der erste Federkörper (3) auf der dem Traglager (1) zugewandten Seite ein bördelbares Kernblech (9) zur Befestigung des ersten Federkörpers (3) am Traglager (1) und der zweite Federkörper (4) innenseitig auf der dem Traglager (1) zugewandten Seite einen hülsenförmigen Rahmen (10) zur Verbindung des zweiten Federkörpers (4) mit dem Traglager (1) aufweist.

8. Lager nach Anspruch 7, **dadurch gekennzeichnet, dass** das Kernblech (9) mit dem ersten Federkörper (3) und/oder der Rahmen (10) mit dem zweiten Federkörper (4) vulkanisiert sind.

9. Lager nach einem der Ansprüche 1 bis 8, **dadurch gekennzeichnet, dass** der zweite Federkörper (4) auf der dem ersten Federkörper (3) axial abgewandten Seite einen mit dem Traglager (1) starr verbundenen tellerförmigen Zuganschlag (11) aufweist, zur Begrenzung von Weg- und Zugspannungen in den Federkörpern (3,4) bei Ausfederung des Lagers und dass der Zuganschlag (11) die dem ersten Federkörper (3) axial abgewandte Oberfläche (12) des zweiten Federkörpers (4) teilweise überdeckt.

10. Verwendung eines Lagers gemäß einem der Ansprüche 1 bis 9 als Flanschlager zur Befestigung eines Getriebes eines Kraftfahrzeugs.
